# EUROPEAN PATENT SPECIFICATION

(11) **EP 2 382 492 B1**
(45) Date of publication and mention of the grant of the patent: **25.03.2020**
(21) Application number: 09837096.8
(22) Date of filing: 29.12.2009
(51) Int. Cl.: G02B 5/02, B32B 27/08, C08J 5/18

(54) **FLUOROPOLYMERIC MULTILAYER OPTICAL FILM AND METHODS OF MAKING AND USING THE SAME**
MEHRSCHICHTIGE OPTISCHE FLUORPOLYMERFOLIE UND VERFAHREN ZUR HERSTELLUNG UND VERWENDUNG DAVON
FILM OPTIQUE MULTICOUCHE FLUOROPOLYMÈRE ET SES PROCÉDÉS DE FABRICATION ET D UTILISATION

(30) Priority: 30.12.2008 US 141572 P
(43) Date of publication of application: 02.11.2011
(73) Proprietor: 3M Innovative Properties Company, St. Paul, MN 55133-3427 (US)
(72) Inventor: HEBRINK, Timothy J., Saint Paul, Minnesota 55133-3427 (US); ZEHENTMAIER, Sebastian F., D-41453 Neuss (DE); MAYER, Ludwig, D-41453 Neuss (DE)
(74) Representative: Vossius & Partner Patentanwälte Rechtsanwälte mbB
(86) International application number: PCT/US2009/069639
(87) International publication number: WO 2010/078289

(56) References cited:
- US-A- 5 278 694
- US-A- 5 831 375
- US-A1- 2004 043 205
- US-A1- 2007 097 509

## Description

### TECHNICAL FIELD

This disclosure broadly relates to multilayer optical films and to methods of making and using the same.

### BACKGROUND

Multilayer optical films have been made that have a plurality of alternating layers of at least two polymeric materials with individual layer thicknesses on the order of a few hundred nanometers or less. When the polymeric materials are selected to have a sufficient mismatch in refractive indices, these multilayer optical films cause constructive interference of wavelengths of light. This results in the multilayer optical film reflecting certain wavelengths while transmitting or absorbing other wavelengths.

Multilayer optical films traditionally have been constructed of alternating layers of non-fluorinated polymeric materials whose alternating layers have a refractive index difference of above 0.1. For example, multilayer optical films are commonly constructed of (poly(ethylene 2,6-naphthalate)) and (poly(methyl methacrylate)) layer pairs, which have a refractive index difference of 0.25; (poly(ethylene terephthalate)) and (copolymers of poly(methyl methacrylate)) layer pairs, which have a refractive index difference of 0.16; and (poly(ethylene 2,6-naphthalate)) and coPEN (derived from naphthalenedicarboxylic acid, an additional dicarboxylic acid, and a diol) layer pairs, which can have refractive index of 0.19 for one polarization of light. US 5278694 and US2004043205A1 can be cited as examples of multilayer optical films.

### SUMMARY

Briefly, in one embodiment, the present disclosure, as defined in the appended claims, provides a multilayer optical film comprising an optical stack, the optical stack comprising a plurality of first optical layers, each first optical layer comprising a single melt-processible copolymer comprising interpolymerized monomers of tetrafluoroethylene, with the proviso that the melt-processible copolymer is not a fluorinated ethylene-propylene copolymer or a perfluoroalkoxy resin; and a plurality of second optical layers disposed in a repeating sequence with the plurality of first optical layers, each second optical layer comprising a non-fluorinated polymeric material selected from the group consisting of poly(methyl methacrylate); copolymers of poly(methyl methacrylate); polypropylene; copolymers of propylene; polystyrenes; copolymers of styrene; polyvinylidene chloride; thermoplastic polyurethanes; copolymers of ethylene; cyclic olefin copolymers; and combinations thereof.

In another embodiment, the present disclosure provides an article comprising a multilayer optical film according to the present disclosure.

In another embodiment, the present disclosure provides a coating comprising small pieces of a multilayer film according to the present disclosure, wherein the largest dimension of each piece is at least twice the thickness of the multilayer optical film and not more than the maximum thickness of the coating.

In another embodiment, the present disclosure provides a method of using a multilayer optical film according to the present disclosure for solar power applications, lighting applications, and/or fenestration products.

In yet another embodiment, the present disclosure discloses a method of making a multilayer optical film comprising providing a first optical layer comprising a melt-processible copolymer comprising interpolymerized monomers of tetrafluoroethylene with the proviso that the melt-processible copolymer is not a fluorinated ethylene-propylene copolymer or a perfluoroalkoxy resin; providing a second optical layer comprising a non-fluorinated polymeric material selected from the group consisting of: poly(methyl methacrylate); copolymers of poly(methyl methacrylate); polypropylene; copolymers of polypropylene; polystyrene; copolymers of styrene; polyvinylidene chloride; thermoplastic polyurethanes; copolymers of ethylene; cyclic olefin copolymers; and combinations thereof; and alternating the first optical layer and the second optical layer to construct a plurality of layers.

Advantageously, these novel multilayer optical films may offer improved performance compared to traditional multilayer optical films.

The above summary is not intended to describe each embodiment. The details of one or more embodiments of the disclosure are also set forth in the description below. Other features, objects, and advantages will be apparent from the description and from the claims.

### BRIEF DESCRIPTION OF DRAWINGS

FIG. 1A is a schematic side view of multilayer optical film 100 according to one exemplary embodiment of the present disclosure;
FIG. 1B is a schematic side view of a two-component optical stack 140 included in the multilayer optical film 100.
FIG. 2 is a graph of wavelength versus reflection for the multilayer optical film of Example 11.
FIG. 3 is a graph of wavelength versus reflection for the multilayer optical film of Example 12.

### DETAILED DESCRIPTION

As used herein, the term
"a", "an", "the", and "at least one of' are used interchangeably and mean one or more;
"and/or" is used to indicate one or both stated cases may occur, for example A and/or B includes, (A and B) and (A or B);
"interpolymerized" refers to monomers that are polymerized together to form a macromolecular compound;
"copolymer" refers to a polymeric material comprising at least two different interpolymerized monomers (i.e., the monomers do not have the same chemical structure) and include, for example, terpolymers (three different monomers), or tetrapolymers (four different monomers);
"polymer" refers to a polymeric material comprising interpolymerized monomers of the same monomer (a homopolymer) or of different monomers (a copolymer);
"light" refers to electromagnetic radiation having a wavelength in a range from 200 nm to 2500 nm;
"melt-processible" refers to a polymeric material that flows upon melting, heating, and/or application of pressure in normal process equipment such as extruders; and
"optical layer" refers to a layer of material having a thickness of about one quarter of a wavelength or wavelengths of light to be reflected.

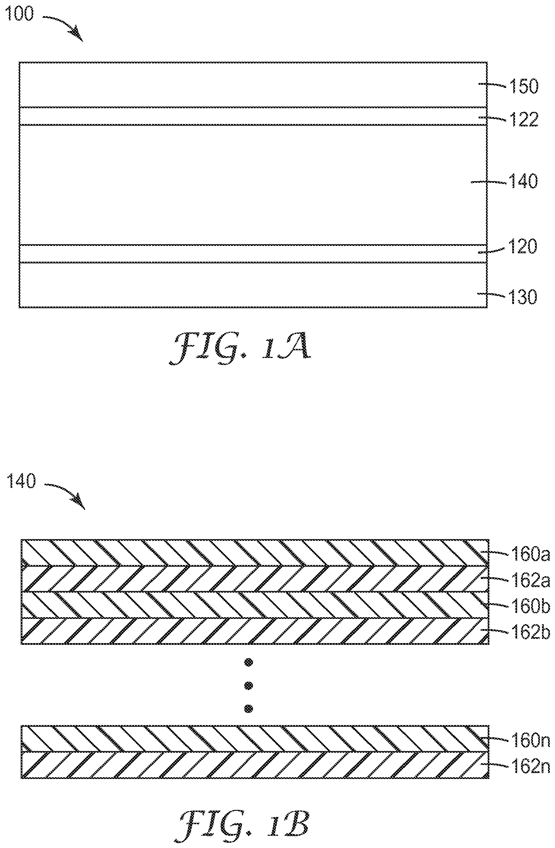

FIG. 1A depicts one exemplary embodiment of the present disclosure. Multilayer optical film 100 comprises optical stack 140 and optional additional layers such as, for example, optional protective boundary layers 120 and 122, and optional skin layers 130 and 150.

Optical stack 140 will be better understood with reference to FIG. 1B. Optical stack 140 comprises first optical layers 160a, 160b, ..., 160n (collectively first optical layers 160) in intimate contact with second optical layers 162a, 162b, ...., 162n (collectively second optical layers 162).

First optical layers 160 of the present disclosure comprise a melt-processible copolymer comprising interpolymerized monomers of tetrafluoroethylene with the proviso that the melt-processible copolymer is not a fluorinated ethylene-propylene copolymer or a perfluoroalkoxy resin. Fluorinated ethylene-propylene copolymer (i.e., FEP) is defined per ASTM D 2116-07 "Standard Specification for FEP-Fluorocarbon Molding and Extrusion Materials" and has a refractive index = 1.34. Perfluoroalkoxy resin (i.e., PFA) is defined per ASTM D 3307-08 "Standard Specification for Perfluoroalkoxy(PFA)-Fluorocarbon Resin Molding and Extrusion Materials" and has a refractive index = 1.35. Polymeric materials comprising tetrafluoroethylene with hexafluoroethylene and/or a vinyl ether, which are outside of the ASTM designations listed above are contemplated. Representative melt-processible copolymers comprising interpolymerized monomers of tetrafluoroethylene include: copolymers of tetrafluoroethylene, hexafluoropropylene, and vinylidene fluoride (e.g., THV); copolymers of tetrafluoroethylene, hexafluoropropylene, and ethylene (e.g., HTE); copolymers of tetrafluoroethylene and norbornene; copolymers of ethylene and tetrafluoroethylene (e.g., ETFE); copolymers of tetrafluoroethylene, hexafluoropropylene, and ethylene (e.g., TFEP); or combinations thereof.

In some embodiments, the representative melt-processible copolymers comprising interpolymerized monomers of tetrafluoroethylene described above include additional monomers, which may be fluorinated or non-fluorinated. Examples include: ring opening compounds such as 3- or 4-membered rings that undergo ring opening under the conditions of polymerization such as, e.g., epoxides; olefinic monomers such as, e.g., propylene, ethylene, vinylidene fluoride, vinyl fluoride, and norbornene; and perfluoro(vinyl ether)s of the formula CF₂=CF-(OCF₂CF(R_{f}))ₐOR'_{f} where R_{f} is a perfluoroalkyl having 1 to 8, typically 1 to 3, carbon atoms, R'_{f} is a perfluoroaliphatic, typically perfluoroalkyl or perfluoroalkoxy, of 1 to 8, typically 1 to 3, carbon atoms, and a is an integer from 0 to 3. Examples of the perfluoro(vinyl ether)s having this formula include: CF₂=CFOCF₃, CF₂=CFOCF₂CF₂CF₂OCF₃, CF₂=CFOCF₂CF₂CF₃, CF₂=CFOCF₂CF(CF₃)OCF₂CF₂CF₃, and CF₂=CFOCF₂CF(CF₃)OCF₂CF(CF₃)OCF₂CF₂CF₃. Particularly useful may be melt-processible copolymers of tetrafluoroethylene and at least two, or even at least three, additional different monomers.

Exemplary melt-processible copolymers of tetrafluoroethylene and other monomer(s) discussed above include those commercially available as: copolymers of tetrafluoroethylene, hexafluoropropylene, and vinylidene fluoride sold under the trade designation "DYNEON THV 220", "DYNEON THV 230", "DYNEON THV 500", "DYNEON THV 500G", "DYNEON THV 510D", "DYNEON THV 610", "DYNEON THV 815", "DYNEON THVP 2030G" by Dyneon LLC., Oakdale, MN; copolymers of tetrafluoroethylene, hexafluoropropylene, and ethylene sold under the trade designation "DYNEON HTE 1510" and "DYNEON HTE 1705" by Dyneon LLC., and "NEOFLON EFEP" by Daikin Industries, Ltd., Osaka, Japan; copolymers of tetrafluoroethylene, hexafluoropropylene, and ethylene sold under the trade designation "AFLAS" by Asahi Glass Co., Ltd., Tokyo, Japan; copolymers of tetrafluoroethylene and norbornene sold under the trade designation "TEFLON AF" by E.I. du Pont de Nemours and Co., Wilmington, DE; and copolymers of ethylene and tetrafluoroethylene sold under the trade designation "DYNEON ET 6210A" and "DYNEON ET 6235" by Dyneon LLC., "TEFZEL ETFE" by E.I. du Pont de Nemours and Co., and "FLUON ETFE" by Asahi Glass Co., Ltd..

Second optical layers 162 of the present disclosure comprise a non-fluorinated polymeric material selected from the group consisting of: poly(methyl methacrylate); copolymers of poly(methyl methacrylate); polypropylene; copolymers of propylene; polystyrenes including, e.g., syndiotactic polystyrene, isotactic polystyrene, and atactic polystyrene, or combinations thereof; copolymers of styrene, such as, e.g., copolymers of acrylonitrile, styrene, and acrylate (e.g., ASA); polyvinylidene chloride; thermoplastic polyurethanes; copolymers of ethylene, such as, e.g., copolymers of ethylene and vinyl acetate (e.g., EVAs); cyclic olefin copolymers; and combinations thereof.

Exemplary non-fluorinated polymeric materials include those such as: poly(methyl methacrylate) sold under the trade designations "CP71" and "CP80" by Ineos Acrylics, Inc., Wilmington, DE; copolymers of poly(methyl methacrylate) sold under the trade designation "PERSPEX CP63" by Ineos Acrylics, Inc. made from 75 weight percent methyl methacrylate and 25 weight percent ethyl acrylate, and a copolymer made from methyl methacrylate and n-butyl methacrylate; polypropylene including atactic polypropylene and isotactic polypropylene; copolymers of polypropylene sold under the trade designation "ADMER" by Mitsui Chemicals America Inc., Rye Brook, NY made from polypropylene and maleic anhydride, and "REXFLEX W111" by Huntsman Chemical Corp., Salt Lake City, UT, which is a copolymer of atactic polypropylene and isotactic polypropylene; polystyrene sold under the trade designation "STYRON" by Dow Chemical Co., Midland, MI; copolymers of polystyrene sold under the trade designation "TYRIL" by Dow Chemical Co., which is a copolymer of styrene and acetonitrile, "STAREX" by Samsung, La Mirada, CA, which is a copolymer of acrylonitrile, styrene, and acrylate, and copolymers of styrene and acrylate available from Noveon a subsidiary of Lubrizol Corp., Wickliffe, OH; PVDC sold under the trade designation "SARAN" by Dow Chemical Co.; thermoplastic polyurethane sold under the trade designation "STATRITE X5091" by Lubrizol Corp., "ELASTOLLAN" by BASF Corp., Freeport, TX, and as available from Bayer MaterialScience, AG, Leverkusen, Germany; coPEs sold under the trade designation "ENGAGE 8200" by Dow Chemical Co., which is a copolymer of ethylene and octene, "DUPONT ELVAX" by E.I. du Pont de Nemours and Co., which is a copolymer of ethylene and vinyl acetate, "DUPONT ELVALOY" by E.I. du Pont de Nemours and Co., which is a copolymer of ethylene and acrylate including butyl-, ethyl- and methyl-acrylates (EBAs, EEAs, and EMAs), and "DUPONT BYNEL" by E.I. du Pont de Nemours and Co., which is an ethylene copolymer; cyclic olefin copolymers sold under the trade designation "TOPAS COC" by Topas Advanced Polymers, Florence, KY, which is a copolymer of ethylene and norbornene; or combinations thereof.

Again referring to FIG. 1B, second optical layers 162 are disposed in a repeating sequence with first optical layers 160. The layer pairs (e.g., wherein first optical layers 160 are A and second optical layers 162 are B may be arranged as alternating layer pairs (e.g., ABABAB...) as shown in FIG. 1B. In other embodiments, the layer pairs may be arranged with intermediate layers such as, for example a third optical layer, C, (e.g., ABCABC...) or in a non-alternating fashion (e.g., ABABABCAB..., ABABACABDAB..., ABABBAABAB..., etc.). Typically, the layer pairs are arranged as alternating layer pairs.

Exemplary layer pairs of the present disclosure include: poly(methyl methacrylate) and (copolymers of hexafluoropropylene, tetrafluoroethylene, and ethylene) layer pairs; poly(methyl methacrylate) and (copolymers of tetrafluoroethylene, hexafluoropropylene, and vinylidene fluoride) layer pairs; copolymers of polypropylene and (copolymers of tetrafluoroethylene, hexafluoropropylene, and vinylidene fluoride) layer pairs; polypropylene and (copolymers of hexafluoropropylene, tetrafluoroethylene, and ethylene) layer pairs; polystyrene and (copolymers of tetrafluoroethylene, hexafluoropropylene, and vinylidene fluoride) layer pairs, including syndiotactic polystyrene and (copolymers of tetrafluoroethylene, hexafluoropropylene, and vinylidene fluoride) layer pairs; copolymers of polystyrene and (copolymers of tetrafluoroethylene, hexafluoropropylene, and vinylidene fluoride) layer pairs; copolymers of polystyrene and (copolymers of hexafluoropropylene, tetrafluoroethylene, and ethylene) layer pairs; copolymers of polyethylene and (copolymers of tetrafluoroethylene, hexafluoropropylene, and vinylidene fluoride) layer pairs; copolymers of polyethylene and (copolymers of hexafluoropropylene, tetrafluoroethylene, and ethylene) layer pairs; (copolymers of acrylonitrile, styrene, and acrylate) and (copolymers of tetrafluoroethylene, hexafluoropropylene, and vinylidene fluoride) layer pairs; (copolymers of acrylonitrile, styrene, and acrylate) and (copolymers of hexafluoropropylene, tetrafluoroethylene, and ethylene) layer pairs; cyclic olefin copolymers and (copolymers of tetrafluoroethylene, hexafluoropropylene, and vinylidene fluoride) layer pairs; cyclic olefin copolymers and (copolymers of hexafluoropropylene, tetrafluoroethylene, and ethylene) layer pairs; thermoplastic polyurethane and (copolymers of tetrafluoroethylene, hexafluoropropylene, and vinylidene fluoride) layer pairs, or combinations thereof.

By appropriate selection of the first optical layers and the second optical layers, optical stack 140 can be designed to reflect or transmit a desired bandwidth of light. It will be understood from the foregoing discussion that the choice of a second optical layer is dependent not only on the intended application of the multilayer optical film, but also on the choice made for the first optical layer, as well as the processing conditions.

As light passes through optical stack 140, the light or some portion of the light will be transmitted through an optical layer, absorbed by an optical layer, or reflected off the interface between the optical layers.

The light transmitted through an optical layer is related to absorbance, thickness, and reflection. Transmission (T) is related to absorbance (A) in that A = -log T, and %A + %T + %reflection = 100%. Reflection is generated at each interface between the optical layers. Referring again to FIG. 1B, first optical layers 160 and second optical layers 162 have respective refractive indices that are different, n₁ and n₂, respectively. Light may be reflected at the interface of adjacent optical layers, for example, at the interface between first optical layer 160a and second optical layer 162a; and/or at the interface between second optical layer 162a and first optical layer 160b. Light that is not reflected at the interface of adjacent optical layers typically passes through successive layers and is either absorbed in a subsequent optical layer, reflected at a subsequent interface, or is transmitted through the optical stack 140 altogether. Typically, the optical layers of a given layer pair are selected such as to be substantially transparent to those light wavelengths at which reflectivity is desired. Light that is not reflected at a layer pair interface passes to the next layer pair interface where a portion of the light is reflected and unreflected light continues on, and so on. In this way, an optical layer stack with many optical layers (e.g., more than 50, more than 100, more than 1000, or even more than 2000 optical layers) is capable of generating a high degree of reflectivity.

In general, the reflectivity of the interface of adjacent optical layers is proportional to the square of the difference in index of refraction on the first optical layer and the second optical layer at the reflecting wavelength. The absolute difference in refractive index between the layer pair (|n₁-n₂|) is typically 0.1 or larger. Higher refractive index differences between the first optical layer and the second optical layer are desirable, because more optical power (e.g., reflectivity) can be created, thus enabling more reflective bandwidth. However, in the present disclosure, the absolute difference between the layer pair may be less than 0.20, less than 0.15, less than 0.10, less than 0.05, or even less than 0.03, depending on the layer pair selected. For example, poly(methyl methacrylate) and DYNEON HTE 1705 have an absolute refractive index difference of 0.12.

By selecting the appropriate layer pairs, the layer thickness, and/or the number of layer pairs, the optical stack can be designed to transmit or reflect the desired wavelengths. The thickness of each layer may influence the performance of the optical stack by either changing the amount of reflectivity or shifting the reflectivity wavelength range. The optical layers typically have an average individual layer thickness of about one quarter of the wavelength of interest, and a layer pair thickness of about one half of the wavelength of interest. The optical layers can each be a quarter-wavelength thick or the optical layers can have different optical thicknesses, as long as the sum of the optical thicknesses for the layer pair is half of a wavelength (or a multiple thereof). For example, to reflect 400 nanometer (nm) light, the average individual layer thickness would be about 100 nm, and the average layer pair thickness would be about 200 nm. Similarly, to reflect 800 nm light, the average individual layer thickness would be about 200 nm, and the average layer pair thickness would be about 400 nm. First optical layers 160 and second optical layers 162 may have the same thicknesses. Alternatively, the optical stack can include optical layers with different thicknesses to increase the reflective wavelength range. An optical stack having more than two layer pairs can include optical layers with different optical thicknesses to provide reflectivity over a range of wavelengths. For example, an optical stack can include layer pairs that are individually tuned to achieve optimal reflection of normally incident light having particular wavelengths or may include a gradient of layer pair thicknesses to reflect light over a larger bandwidth. The normal reflectivity for a particular layer pair is primarily dependent on the optical thickness of the individual layers, where optical thickness is defined as the product of the actual thickness of the layer times its refractive index. The intensity of light reflected from the optical layer stack is a function of its number of layer pairs and the differences in refractive indices of optical layers in each layer pair. The ratio n₁d₁/(n₁d₁ +n₂d₂) (commonly termed the "f-ratio") correlates with reflectivity of a given layer pair at a specified wavelength. In the f-ratio, n₁ and n₂ are the respective refractive indexes at the specified wavelength of the first and second optical layers in a layer pair, and d₁ and d₂ are the respective thicknesses of the first and second optical layers in the layer pair. By proper selection of the refractive indexes, optical layer thicknesses, and f-ratio, one can exercise some degree of control over the intensity of first order reflection. For example, first order visible reflections of violet (400 nanometers wavelength) to red (700 nanometers wavelength) can be obtained with layer optical thicknesses between about 0.05 and 0.3 nanometers. In general, deviation from an f-ratio of 0.5 results in a lesser degree of reflectivity.

The equation λ/2 = n₁d₁+n₂d₂ can be used to tune the optical layers to reflect light of wavelength λ at a normal angle of incidence. At other angles, the optical thickness of the layer pair depends on the distance traveled through the component optical layers (which is larger than the thickness of the layers) and the indices of refraction for at least two of the three optical axes of the optical layer. The optical layers can each be a quarter-wavelength thick or the optical layers can have different optical thicknesses, as long as the sum of the optical thicknesses is half of a wavelength (or a multiple thereof). An optical stack having more than two layer pairs can include optical layers with different optical thicknesses to provide reflectivity over a range of wavelengths. For example, an optical stack can include layer pairs that are individually tuned to achieve optimal reflection of normally incident light having particular wavelengths or may include a gradient of layer pair thicknesses to reflect light over a larger bandwidth.

A typical approach is to use all or mostly quarter-wave film stacks. In this case, control of the spectrum requires control of the layer thickness profile in the film stack. A broadband spectrum, such as one required to reflect visible light over a large range of angles in air, still requires a large number of layers if the layers are polymeric, due to the relatively small refractive index differences achievable with polymer films compared to inorganic films. Layer thickness profiles of such optical stacks can be adjusted to provide for improved spectral characteristics using the axial rod apparatus taught in U.S. Pat. No. 6,783,349 (Neavin et al.) combined with layer profile information obtained with microscopic techniques.

A desirable technique for providing a multilayer optical film with a controlled spectrum include:
1) The use of an axial rod heater control of the layer thickness values of coextruded polymer layers as taught in U.S. Pat. No. 6,783,349 (Neavin et al.).
2) Timely layer thickness profile feedback during production from a layer thickness measurement tool such as e.g., an atomic force microscope, a transmission electron microscope, or a scanning electron microscope.
3) Optical modeling to generate the desired layer thickness profile.
4) Repeating axial rod adjustments based on the difference between the measured layer profile and the desired layer profile.

The basic process for layer thickness profile control involves adjustment of axial rod zone power settings based on the difference of the target layer thickness profile and the measured layer profile. The axial rod power increase needed to adjust the layer thickness values in a given feedblock zone may first be calibrated in terms of watts of heat input per nanometer of resulting thickness change of the layers generated in that heater zone. Fine control of the spectrum is possible using 24 axial rod zones for 275 layers. Once calibrated, the necessary power adjustments can be calculated once given a target profile and a measured profile. The procedure may be repeated until the two profiles converge.

For example, the layer thickness profile (layer thickness values) of the optical stack may be adjusted to be approximately a linear profile with the first (thinnest) optical layers adjusted to have about a quarter wave optical thickness (index times physical thickness) for 340 nm light and progressing to the thickest layers, which were adjusted to be about a quarter wave thick optical thickness for 420 nm light.

Increasing the number of optical layers in the optical stack may also provide more optical power. For example, if the refractive index between the layer pairs is small, the optical stack may not achieve the desired reflectivity, however by increasing the number of layer pairs, sufficient reflectivity may be achieved. In one embodiment of the present disclosure, the optical stack comprises at least 2 first optical layers and at least 2 second optical layers, at least 5 first optical layers and at least 5 second optical layers, at least 50 first optical layers and at least 50 second optical layers, at least 200 first optical layers and at least 200 second optical layers, at least 500 first optical layers and at least 500 second optical layers, or even at least 1000 first optical layers and at least 1000 second optical layers.

Birefringence (e.g., caused by stretching) of optical layers is another effective method for increasing the difference in refractive index of the optical layers in a layer pair. Optical stacks that include layer pairs, which are oriented in two mutually perpendicular in-plane axes are capable of reflecting an extraordinarily high percentage of incident light depending on, e.g., the number of optical layers, f-ratio, and the indices of refraction, and are highly efficient reflectors.

As mentioned, the optical stack of this disclosure may be designed to reflect or transmit at least a specific bandwidth (i.e., wavelength range) of interest. In one embodiment, the optical stack of the present disclosure transmits at least one of the following: at least a portion of the wavelengths between about 400-700 nm, between about 380-780 nm, or even between about 350-800 nm; at least a portion of the wavelengths greater than about 700 nm, greater than about 780 nm, or even greater than about 800 nm; at least a portion of the wavelengths between about 700-2500 nm, between about 800-1300 nm, or even between about 800-1100 nm; at least a portion of the wavelengths between about 300-400 nm, or even between about 250-400 nm; at least a portion of the wavelengths less than about 300 nm; or combinations thereof. By "at least a portion" is meant to comprise not only the entire range of wavelengths, but also a portion of the wavelengths, such as a bandwidth of at least 2 nm, 10 nm, 25 nm, 50 nm, or 100 nm. By "transmits" is meant that at least 30, 40, 50, 60, 70, 80, 85, 90, 92, or 95 percent of the wavelengths of interest are transmitted at a 90 degree angle of incidence.

In one embodiment, the optical stack of the present disclosure reflects at least one of the following: at least a portion of the wavelengths between about 400-700 nm, between about 380-780 nm, or even between about 350-800 nm; at least a portion of the wavelengths greater than about 700 nm, greater than about 780 nm, or even greater than about 800 nm; at least a portion of the wavelengths between about 700-2500 nm, between about 800-1300 nm, or even between about 800-1100 nm; at least a portion of the wavelengths between about 300-400 nm, or even between about 250-400 nm; at least a portion of the wavelengths less than about 300 nm; or combinations thereof. By "reflects" is meant that at least 30, 40, 50, 60, 70, 80, 85, 90, 92, or 95 percent of the wavelengths of interest are reflected at a 90 degree angle of incidence.

Layer pairs, number of layers, and thickness of layers may be selected so that the optical stack reflects a first bandwidth of light and transmits a second bandwidth of light. For example, the optical stack may transmit visible wavelengths (e.g., 400-700 nm) and reflect infrared wavelengths (e.g., 700-2500 nm), transmit ultraviolet wavelengths (e.g., 250-400 nm) and reflect infrared wavelengths, or transmit infrared wavelengths and reflect UV wavelengths.

In addition to the optical stack described above, additional layers such as those shown in FIG. 1A may optionally be applied in the multilayer optical film to modify or enhance the physical, chemical, and/or optical characteristics of the multilayer optical film. A non-limiting listing of coatings or layers that may optionally be used in multilayer optical films according to the present invention is detailed in the following paragraphs.

In one embodiment, the multilayer optical films comprise one or more optical layers. It will be appreciated that multilayer optical films can consist of a single optical stack or can be made from multiple optical stacks that are subsequently combined to form the multilayer optical film. Additional optical layers that may be added include, e.g.,: polarizers, mirrors, clear to colored films, colored to colored films, cold mirrors, or combinations thereof.

In one embodiment, the multilayer optical film comprise one or more non-optical layers such as, for example, one or more skin layers or one or more interior non-optical layers, such as, for example, protective boundary layers between packets of optical layers. Non-optical layers can be used to give the multilayer optical film structure or to protect it from harm or damage during or after processing. For some applications, it may be desirable to include sacrificial protective skins, wherein the interfacial adhesion between the skin layer(s) and the optical stack is controlled so that the skin layers can be stripped from the optical stack before use.

Typically, one or more of the non-optical layers are placed so that at least a portion of the light to be transmitted or reflected by optical layers also travels through these layers (i.e., these layers are placed in the path of light which travels through or is reflected by the first and second optical layers). The non-optical layers may or may not affect the reflective or transmissive properties of the optical stack over the wavelength region of interest. Generally, they should not affect the optical properties of the optical stack.

Materials may be chosen for the non-optical layers that impart or improve properties such as, for example, tear resistance, puncture resistance, toughness, weatherability, and/or chemical resistance of the multilayer optical film. When selecting a material for use in, for example a tear resistant layer, many factors should be considered such as, percent elongation at break, Young's modulus, tear strength, adhesion to interior layers, percent transmittance and absorbance in the wavelength(s) of interest, optical clarity and haze, weatherability, and permeability to various gases and solvents. Examples of materials that may be used as tear resistant layers include: polycarbonates, blends of polycarbonates and copolymers of polyesters, copolymers of polyethylene, copolymers of polypropylene, copolymers of ethylene and tetrafluoroethylene, (copolymers of hexafluoroethylene, tetrafluoroethylene, and ethylene), and poly(ethylene terephthalate).

The non-optical layers may be of any appropriate material and can be the same as one of the materials used in the optical stack. Of course, it is important that the material chosen not have optical properties too deleterious to those of the optical stack(s). The non-optical layers may be formed from a variety of polymers, including any of the polymeric materials used in the first and second optical layers. In some embodiments, the material selected for the non-optical layers is similar to or the same as the polymeric material selected for the first optical layers and/or the polymeric material selected for the second optical layers.

An optional UV-absorbing layer may be applied to the multilayer optical film to shield the multilayer optical film from UV-radiation that may cause degradation. Solar light, in particular UV radiation from 280 to 400 nm, can induce degradation of plastics, which in turn results in color change and deterioration of optical and mechanical properties. Inhibition of photo-oxidative degradation is important for outdoor applications wherein long term durability is mandatory. The absorption of UV-radiation by poly(ethylene terephthalate)s, for example, starts at around 360 nm, increases markedly below 320 nm, and is very pronounced at below 300 nm. Poly(ethylene naphthalate)s strongly absorb UV-radiation in the 310-370 nm range, with an absorption tail extending to about 410 nm, and with absorption maxima occurring at 352 nm and 337 nm. Chain cleavage occurs in the presence of oxygen, and the predominant photooxidation products are carbon monoxide, carbon dioxide, and carboxylic acids. Besides the direct photolysis of the ester groups, consideration has to be given to oxidation reactions, which likewise form carbon dioxide via peroxide radicals.

The UV-absorbing layer comprises a polymer and a UV-absorber. Typically, the polymer is a thermoplastic polymer, but this is not a requirement. Examples of suitable polymers include polyesters (e.g., poly(ethylene terephthalate)), fluoropolymers, polyamides, acrylics (e.g., poly(methyl methacrylate)), silicone polymers (e.g., thermoplastic silicone polymers), styrenic polymers, polyolefins, olefinic copolymers (e.g., copolymers of ethylene and norbornene available as TOPAS COC), silicone copolymers, urethanes, or combinations thereof (e.g., a blend of polymethyl methacrylate and polyvinylidene fluoride).

The UV-absorbing layer shields the multilayer optical film by absorbing UV-light. In general, the UV-absorbing layer may include any polymer composition (i.e., polymer plus additives) that is capable of withstanding UV-radiation for an extended period of time.

A variety of UV light absorbing and stabilizing additives are typically incorporated into the UV-absorbing layer to assist in its function of protecting the multilayer optical film. Non-limiting examples of the additives include one or more compounds selected from UV light absorbers, hindered amine light stabilizers, antioxidants, and combinations thereof.

UV-stabilizers such as UV-absorbers are chemical compounds that can intervene in the physical and chemical processes of photoinduced degradation. The photooxidation of polymers from UV-radiation can therefore be prevented by use of a UV-absorbing layer that contains at least one UV-absorber to effectively absorb light at wavelengths less than about 400 nm. UV-absorbers are typically included in the UV-absorbing layer in an amount that absorb at least 70 percent, typically 80 percent, more typically greater than 90 percent, or even greater than 99 percent of incident light in a wavelength region from 180 to 400 nm.

Typical UV-absorbing layer thicknesses are from 10 to 500 micrometers, although thinner and thicker UV-absorbing layers may also be used. Typically, the UV-absorber is present in the UV-absorbing layer in an amount of from 2 to 20 percent by weight, but lesser and greater levels may also be used.

One exemplary UV-absorbing compound is a benzotriazole compound, 5-trifluoromethyl-2-(2-hydroxy-3-alpha-cumyl-5-tert-octylphenyl)-2H-benzotriazole. Other exemplary benzotriazoles include, e.g.,: 2-(2-hydroxy-3,5-di-alpha-cumylphenyl)-2H-benzotriazole, 5-chloro-2-(2-hydroxy-3-tert-butyl-5-methylphenyl)-2H-benzotiazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-alpha-cumyl-5-tert-octylphenyl)-2H-benzotriazole, 2-(3-tert-butyl-2-hydroxy-5-methylphenyl)-5-chloro-2H-benzotriazole. Additional exemplary UV-absorbing compounds include 2-(4,6-diphenyl-1-3,5-triazin-2-yl)-5-hexyloxy-phenol, and those sold under the trade designation "TINUVIN 1577" and "TINUVIN 900" by Ciba Specialty Chemicals Corp., Tarrytown, NY. In addition, UV-absorber(s) can be used in combination with hindered amine light stabilizer(s) (HALS) and/or antioxidants. Exemplary HALSs include those sold under the trade designation "CHIMASSORB 944" and "TINUVIN 123" by Ciba Specialty Chemicals Corp.. Exemplary antioxidants include those sold under the trade designation "IRGANOX 1010" and "ULTRANOX 626" by Ciba Specialty Chemicals Corp..

In addition to adding UVA, HALS, and antioxidants to the UV-absorbing layer, the UVA, HALS, and antioxidants can be added to other layers including the first or second optical layers of the present disclosure.

In another embodiment, an optional IR-absorbing layer may be applied to the multilayer optical film to shield the multilayer optical film from IR radiation. The IR-absorbing layer comprises a polymer and an IR-absorber. The IR-absorbing layer may be coated onto the multilayer optical film or may be extrusion blended into a polymer layer. Exemplary IR-absorbing compounds include: indium tin oxide; antimony tin oxide; IR-absorbing dyes such as those sold under the trade designation "EPOLIGHT 4105", "EPOLIGHT 2164", "EPOLIGHT 3130", and "EPOLIGHT 3072" by Epolin, Inc., Newark, NJ; heteropolyacids such as those described in U.S. Pat. No. 4,244,741 (Kruse); metal complexes such as those described in U.S. Pat. No. 3,850,502 (Bloom); nickel complex dyes such as SDE8832 by H.W. Sands Corp., Jupiter, FL; and palladium complex dyes such as SDA5484 also by H.W. Sands Corp..

To further enhance the reflectance and/or transmissive performance or visual characteristics of the multilayer optical film, additional additives may be added to at least one of the layers. For example, the multilayer optical film may be treated with inks, dyes or pigments to alter the appearance or to customize the multilayer optical film for specific applications. Thus, for example, the multilayer optical films may be treated with inks or other printed indicia such as those used to display product information, advertisements, decoration or other information. Various techniques may be used to print on the multilayer optical film, such as, e.g., screen printing, letterpress, and offset. Various types of ink may also be used including, e.g., one- or two-component inks, oxidatively drying and UV-drying inks, dissolved inks, dispersed inks, and 100% ink systems. The appearance of the multilayer optical film may also be colored such as, e.g., laminating a dyed layer onto the multilayer optical film, applying a pigmented coating to the surface of the multilayer optical film, including a pigment in one or more of the layers (e.g., the first or second optical layers, the additional optical layers or the non-optical layers) or combinations thereof. Both visible and near IR compounds are contemplated in the present disclosure, and include, for example, optical brighteners such as compounds that absorb in the UV and fluoresce in the visible range.

Other additives that may be included in the multilayer optical film include particulates. For example, carbon black particles can be dispersed in the polymeric or coated onto substrates to provide shading. Additionally, or alternately, small particle non-pigmentary zinc oxide, indium tin oxide, and titanium oxide can also be used as blocking, reflecting, or scattering additives to minimize UV-radiation degradation. The nanoscale particles are transparent to visible light while either scattering or absorbing harmful UV-radiation thereby reducing damage to thermoplastics. U.S. Pat. No. 5,504,134 (Palmer et al.) describes attenuation of polymer substrate degradation due to UV radiation through the use of metal oxide particles in a size range of about 0.001 micrometer to about 0.20 micrometer in diameter, and more typically from about 0.01 to about 0.15 micrometers in diameter. U.S. Pat. No. 5,876,688 (Laundon) teaches a method for producing micronized zinc oxide that are small enough to be transparent when incorporated as UV blocking and/or scattering agents in paints, coatings, finishes, plastic articles, and cosmetics, which are well suited for use in the present invention. These fine particles such as zinc oxide and titanium oxide with particle size ranged from 10-100 nm that can attenuate UV-radiation are commercially available from Kobo Products, Inc., South Plainfield, NJ.

The multilayer optical films may optionally comprise an abrasion resistant layer The abrasion resistant layer may comprise any abrasion resistant material that is transparent to the wavelengths of interest. Examples of scratch resistant coatings include: a thermoplastic urethane sold under the trade designation "TECOFLEX" by Lubrizol Advanced Materials, Inc., Cleveland, OH containing 5 weight percent of a UV-absorber sold under the trade designation "TINUVIN 405" by Ciba Specialty Chemicals Corp., 2 weight percent of a hindered amine light stabilizer sold under the trade designation "TINUVIN 123", and 3 weight percent of a UV-absorber sold under the trade designation "TINUVIN 1577" by Ciba Specialty Chemicals Corp.; and a scratch resistant coating consisting of a thermally cured nano-silica siloxane filled polymer sold under the trade designation "PERMA-NEW 6000 CLEAR HARD COATING SOLUTION" by California Hardcoating Co., Chula Vista, CA.

The abrasion resistant layer may optionally include at least one antisoiling component. Examples of antisoiling components include fluoropolymers, silicone polymers, titanium dioxide particles, polyhedral oligomeric silsesquioxanes (e.g., as sold under the trade designation "POSS" by Hybrid Plastics of Hattiesburg, MS), or combinations thereof. The abrasion resistant layer may also comprise a conductive filler, typically a transparent conductive filler.

The multilayer optical films of the present disclosure may optionally comprise one or more boundary films or coatings to alter the transmissive properties of the multilayer optical film towards certain gases or liquids. These boundary films or coatings inhibit the transmission of water vapor, organic solvents, oxygen, and/or carbon dioxide through the film. Boundary films or coatings may be particularly desirable in high humidity environments, where components of the multilayer optical film may be subject to distortion due to moisture permeation.

Additional optional layers may also be considered, for example, antistatic coatings or films, and anti-fogging materials.

The optional additional layers can be thicker than, thinner than, or the same thickness as the various optical layers of the optical stack. The thickness of the optional additional layers is generally at least four times, typically at least 10 times, and can be at least 100 times or more, the thickness of at least one of the individual optical layers. The thickness of the additional layers can be varied to make a multilayer optical film having a particular thickness.

In the multilayer optical film, the optional additional layers may be applied via co-extrusion or any adhesion techniques known in the art including, e.g., the use of adhesives, temperature, pressure, or combinations thereof. If present, an optional tie layer facilitates adhesion between layers of the multilayer optical film, primarily between the optical stack and the optional additional layers. The tie layer may be organic (e.g., a polymeric layer) or inorganic. Exemplary inorganic tie layers include metal oxides such as e.g., titanium dioxide, aluminum oxide, or combinations thereof. The tie layer may be provided by any suitable means, including solvent casting and powder coating techniques. In order that it does not degrade performance of the multilayer optical film, the optional tie layer is typically substantially not absorptive of light over the wavelengths of interest.

The optical stack can be fabricated by methods well-known to those of skill in the art by techniques such as e.g., co-extruding, laminating, coating, vapor deposition, or combinations thereof. In co-extrusion, the polymeric materials are co-extruded into a web. In co-extrusion, it is preferred that the two polymeric materials have similar rheological properties (e.g., melt viscosities) to prevent layer instability or non-uniformity. In lamination, sheets of polymeric materials are layered together and then laminated using either heat, pressure, and/or an adhesive. In coating, a solution of one polymeric material is applied to another polymeric material. In vapor deposition, one polymeric material is vapor deposited onto another polymeric material. Additionally, functional additives may be added to the first optical layer, the second optical layer, and/or the optional additional layers to improve processing. Examples of functional additives include processing additives, which may e.g., enhance flow and/or reduce melt fracture.

Further considerations relating to the selection of materials and manufacturing of optical stacks and multilayer optical films can be obtained with reference to U.S. Pat. Nos. 5,552,927 (Wheatley et al.); 5,882,774 (Jonza et al.); 6,827,886 (Neavin et al.); and 6,830,713 (Hebrink et al.).

Typically, the polymeric materials of the first and second optical layers and the optional additional layers are chosen to have similar rheological properties (e.g., melt viscosities) so that they can be co-extruded without flow disturbances. The first and second optical layers and the optional additional layers used also should have sufficient interfacial adhesion so that the multilayer optical film does not delaminate.

The ability to achieve the desired relationships among the various indices of refraction (and thus the optical properties of the optical stack) is influenced by processing conditions used to prepare the optical stack. In one embodiment, the multilayer optical films are generally prepared by co-extruding the individual polymeric materials to form a multilayer optical film and then orienting the multilayer optical film by stretching at a selected temperature, optionally followed by heat-setting at a selected temperature. Alternatively, the extrusion and orientation steps may be performed simultaneously.

The multilayer optical film may be stretched in the machine direction, as with a length orienter, or in width using a tenter. The pre-stretch temperature, stretch temperature, stretch rate, stretch ratio, heat set temperature, heat set time, heat set relaxation, and cross-stretch relaxation are selected to yield a multilayer optical film having the desired refractive index relationship. These variables are interdependent, thus, for example, a relatively low stretch rate could be used if coupled with, e.g., a relatively low stretch temperature. It will be apparent to one of ordinary skill how to select the appropriate combination of these variables to achieve the desired multilayer optical film. If a film is stretched, in general, a stretch ratio in the range from 1:2 to 1:10, or 1:3 to 1:7 in the one stretch direction and from 1:0.2 to 1:10 or even 1:0.2 to 1:7 orthogonal to this one stretch direction is preferred. In some embodiments the overall draw ratio is greater than 3:1, greater than 4:1 or even greater than 6:1.

The multilayer optical film is generally a compliant sheet of material. For purposes of the present disclosure, the term compliant is an indication that the multilayer optical film is dimensionally stable yet possesses a pliable characteristic that enables subsequent molding or shaping into various forms. In one embodiment, the multilayer optical film may be thermoformed into various shapes or structures for specific end use applications.

The multilayer optical film of the present disclosure may find a number of uses. In one embodiment of the present disclosure, the multilayer optical film is an article, such as a UV mirror (i.e., reflects UV wavelengths), an IR mirror (i.e., reflects IR wavelengths), and/or a visible mirror (i.e., reflects visible wavelengths). In another embodiment, the multilayer optical film of the present disclosure may find use in areas where reflection and/or transmission of various wavelengths is desirable. The multilayer optical films may be positioned onto a pane of glass or between two or more panes for glass to be used, for example, in buildings and automobiles to reflect infrared wavelengths, thus lowering heat loads. Further, the multilayer optical films may be positioned onto other substantially transparent plastics to provide reflective properties.

The multilayer optical film of the present disclosure may be used in architectural applications, greenhouse applications, solar power applications, lighting, fenestration products, and/or other applications. The multilayer optical films of the present disclosure may offer advantages including: non- or reduced flammability, improved corrosion resistance, and/or improved UV- and weathering-stability as compared to multilayer optical films made with optical stacks not comprising fluoropolymeric optical layers.

In one embodiment, the multilayer optical film may be used in architectural applications as for example a roof covering, a partial roof covering, a façade covering, or a dome covering. The multilayer optical film used in architectural applications may be designed so as to transmit visible light, but reflect infrared wavelengths, allowing for a transparent covering that will decrease heat load in buildings. In another embodiment, the multilayer optical film used in greenhouse applications may be designed so as to transmit UV wavelengths to allow for maximum plant growth. In another embodiment, the multilayer optical film may be used in solar power applications. For example, in solar power applications, the multilayer optical film may be used in solar cells, solar collection (thermal heating), solar photovoltaic cells, concentrated photovoltaic, or concentrated solar power applications. In another embodiment the multilayer optical film may be used in lighting applications such as shatter resistant lamp covers or reflectors. In another embodiment the multilayer optical film may be used in fenestration products (i.e., products that fill openings in a building, such as windows, doors, skylights, or curtain walls, which e.g., are designed to permit the passage of light). For further discussion, see U.S. Prov. Appl. 61/141603 (Attorney Docket No. 64816US002) filed concomitantly with the present disclosure.

In another embodiment, the multilayer optical film of the present disclosure may be converted into glitter in any of a variety of desired shapes and sizes. The glitter may be incorporated into a matrix material (e.g., a cross-linked polymeric material) or a coating composition. The size and shape of the glitter is typically chosen to optimize the appearance of the glitter or to suit a particular end use application. Typically, the glitter used in a coating composition is in pieces wherein the largest dimension of each piece is at least twice the thickness of the multilayer optical film and not more than the maximum thickness of the coating.

Advantages and embodiments of this disclosure are further illustrated by the following examples, but the particular materials and amounts thereof recited in these examples, as well as other conditions and details, should not be construed to unduly limit this disclosure. All materials are commercially available or known to those skilled in the art unless otherwise stated or apparent.

### EXAMPLES

The following specific, but non-limiting examples will serve to illustrate the disclosure.

Examples 1-10 and Comparative Examples A and B: Cast films of various fluorinated polymeric materials were made as follows. The fluorinated polymeric material was delivered at a rate X into a single screw extruder, which was run at a screw speed of Y. The extrudate was extruded at a suitable temperature and was cast onto a three-roll stack at a roll speed of Z and was wound. The thickness of each film was measured to be 500 micrometer (µm) thick with a micrometer gauge. Shown in Table 1 below is the Example, delivery rate in kilograms per hour (kg/hr), screw speed in revolutions per minute (rpm), and roll speed in meters per minute (m/min) for each of the samples tested. All fluorinated polymeric materials were obtained from Dyneon LLC., Oakdale, MN. Each of the cast films was measured with a spectrophotometer (LAMBDA 950 UV/VIS/NIR from PerkinElmer, Inc., Waltham, MA).

**TABLE 1**

| EXAMPLE | DYNEON FLORINATED POLYMERIC MATERIAL | DELIVERY RATE X | SCREW SPEED Y | ROLL SPEED Z |
|---|---|---|---|---|
| 1 | ET 6235 | 2.9 kg/hr | 20 rpm | 0.20 m/min |
| 2 | ETFE 6218X | 2.9 kg/hr | 20 rpm | 0.20 m/min |
| 3 | HTE 1705 | 4.6 kg/hr | 26 rpm | 0.32 m/min |
| 4 | HTE 1510 | 4.5 kg/hr | 24 rpm | 0.30 m/min |
| 5 | THV 220 | 3.9 kg/hr | 18 rpm | 0.24 m/min |
| 6 | THV 500 | 4.8 kg/hr | 24 rpm | 0.30 m/min |
| 7 | THV 415G | 5.4 kg/hr | 25 rpm | 0.33 m/min |
| 8 | THVP 2030GX | 4.1 kg/hr | 22 rpm | 0.25 m/min |
| Comparative Example A | PFA 6502T | 3.5 kg/hr | 30 rpm | 0.20 m/min |
| Comparative Example B | FEP 6303 | 3.3 kg/hr | 25 rpm | 0.20 m/min |
| 9 | PVDF 1010/0001 | 4.2 kg/hr | 22 rpm | 0.27 m/min |
| 10 | PVDF1008/0001 | 4.2 kg/hr | 22 rpm | 0.27 m/min |

Table 2 (below) reports the % transmittance for each of the fluorinated polymeric materials in Table 1 at selected wavelengths.

**TABLE 2**

| EXAMPLE | % TRANSMITTANCE | | | | | | | | |
|---|---|---|---|---|---|---|---|---|---|
| | 250 nm | 300 nm | 350 nm | 450 nm | 550 nm | 650 nm | 750 nm | 850 nm | 950 nm |
| 1 | 33.2 | 52.9 | 64.0 | 73.5 | 80.1 | 84.3 | 87.1 | 89.1 | 90.7 |
| 2 | 39.3 | 57.1 | 65.8 | 74.2 | 80.4 | 84.5 | 87.2 | 89.1 | 90.6 |
| 3 | 54.1 | 65.5 | 71.1 | 80.3 | 85.7 | 88.8 | 90.8 | 92.1 | 93.1 |
| 4 | 51.8 | 53.3 | 72.0 | 82.5 | 87.7 | 90.7 | 92.2 | 93.2 | 94.0 |
| 5 | 85.0 | 89.3 | 92.2 | 94.2 | 94.8 | 95.0 | 95.1 | 95.2 | 95.3 |
| 6 | 90.1 | 88.6 | 89.6 | 92.4 | 93.9 | 94.6 | 95.0 | 95.2 | 95.4 |
| 7 | 89.7 | 90.6 | 92.3 | 94.3 | 94.9 | 95.3 | 95.3 | 95.4 | 95.6 |
| 8 | 90.9 | 93.2 | 94.3 | 95.1 | 95.3 | 95.4 | 95.4 | 95.3 | 95.7 |
| Comparative Example A | 85.4 | 80.1 | 82.0 | 87.8 | 91.1 | 93.0 | 93.9 | 94.5 | 95.0 |
| Comparative Example B | 90.8 | 84.2 | 84.0 | 88.3 | 91.1 | 92.8 | 93.7 | 94.4 | 95.0 |
| 9 | 72.0 | 77.2 | 83.4 | 86.4 | 87.8 | 88.7 | 89.2 | 89.7 | 90.5 |
| 10 | 77.8 | 79.3 | 83.5 | 86.1 | 87.6 | 88.7 | 89.2 | 89.8 | 90.5 |

Example 11: A coextruded film containing 61 layers was made by extruding a cast web in one operation and later stretching the film in a laboratory film-stretching apparatus. Poly(methyl methacrylate) (sold under the trade designation "ALTUGLAS V O44" by Arkema Inc., Colombes Cedex, France), delivered by one extruder at a rate of 10 pounds per hour, copolymer of tetrafluoroethylene, hexafluoropropylene, and vinylidene fluoride (sold under the trade designation "DYNEON THVP 2030G X" by Dyneon, LLC.) delivered by another extruder at a rate of 17 pounds per hour, and poly(methyl methacrylate) for the skin layers delivered by a third extruder at a rate of 10 pounds per hour, were coextruded through a multilayer polymer melt manifold to create a multilayer melt stream having 61 layers with poly(methyl methacrylate) skin layers. This multilayer coextruded melt stream was cast onto a chill roll at 4.0 meters per minute (m/min), creating a multilayer cast web 10 mils (about 0.25 millimeter (mm)) thick and 6.5 inches (about 16.5 centimeter (cm)) wide.

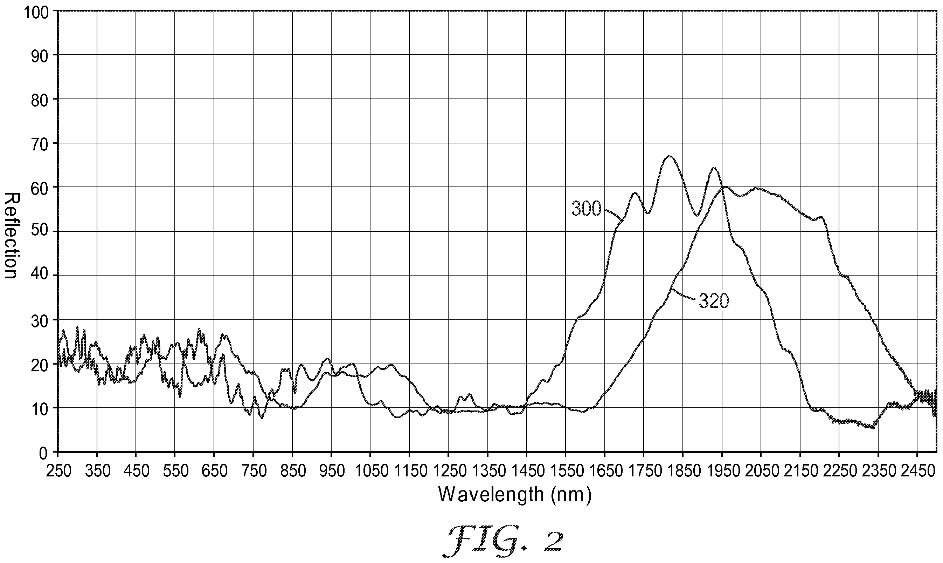

The multilayer cast web was stretched using a laboratory stretching device, which uses a pantograph to grip a square section of web and simultaneously stretches the web in both directions at a uniform speed. A 4 inch (about 10 cm) square of the multilayer cast web was placed into the stretching frame and heated in an oven at 140°C in 55 seconds. The multilayer cast web was then stretched at 25 %/sec (based on the original dimensions) until the web was stretched to about 3 x 3 times the original dimensions. Immediately after stretching, the multilayer optical film was taken out of the stretching device and cooled at room temperature. The multilayer optical film was found to have a thickness of 1 mil (25 µm). The multilayer optical film was measured with a micrometer gauge and was found to have a thickness of 25 µm at the center of the film and 31 µm at the edges of the film. The multilayer optical film was measured with a LAMBDA 950 UV/VIS/NIR spectrophotometer and the percent reflection at various wavelengths is shown in FIG. 2. In FIG. 2, spectrum 300 is the reflection spectrum taken at the center of the film, and spectrum 320 is the reflection spectrum taken at the edge of the film. As shown in FIG. 2, the reflection spectrum may shift based on the thickness of the multilayer optical film.

Example 12: A coextruded film containing 61 layers was made by extruding a cast web in one operation and later stretching the film in a laboratory film-stretching apparatus. Copolymers of polypropylene (sold under the trade designation "TOTAL POLYPROPYLENE 8650" by Total Petrochemicals, Inc., Houston, TX), delivered by one extruder at a rate of 14 pounds per hour, DYNEON THVP 2030G X delivered by another extruder at a rate of 15 pounds per hour, and copolymers of polypropylene for the skin layers, delivered by a third extruder at a rate of 10 pounds per hour, were coextruded through a multilayer polymer melt manifold to create a multilayer melt stream having 61 layers with copolymers of polypropylene skin layers. This multilayer coextruded melt stream was cast onto a chill roll at 2.2 m/min creating a multilayer cast web 20 mils (about 0.51 mm) thick and 7.25 inches (about 18.5 cm) wide.

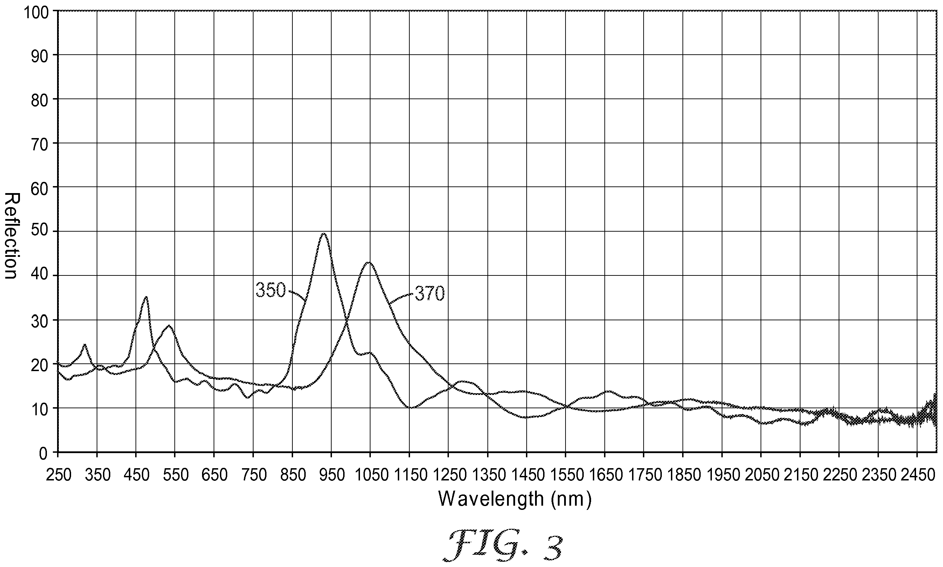

The multilayer cast web was stretched using a laboratory stretching device, which uses a pantograph to grip a square section of web and simultaneously stretches the web in both directions at a uniform speed. A 4 inch (about 10 cm) square of the multilayer cast web was placed into the stretching frame and heated in an oven at 145°C in 45 seconds. The multilayer cast web was then stretched at 50 %/sec (based on the original dimensions) until the web was stretched to about 5 x 5 times the original dimensions. Immediately after stretching, the multilayer optical film was taken out of the stretching device and cooled at room temperature. The multilayer optical film measured with a micrometer gauge and was found to have a thickness of about 19 µm at the center and about 17 µm at the edges. The multilayer optical film was measured with a LAMBDA 950 UV/VIS/NIR spectrophotometer and the percent reflection at various wavelengths is shown in FIG. 3. In FIG. 3, spectrum 370 is the reflection spectrum taken at the center of the film, and spectrum 350 is the reflection spectrum taken at the edge of the film. As shown in FIG. 3, the reflection spectrum may shift based on the thickness of the multilayer optical film.

Example 13 A coextruded film containing 151 layers was made by extruding the cast web in one operation and later orienting the film in a laboratory film-stretching apparatus. ALTUGLAS V O44 (PMMA), delivered by one extruder at a rate of 10 pounds per hour (wherein 10% of the flow of the PMMA went into two outer protective boundary layers, each boundary layer being about 10 times the thickness of the high index optical layer), a copolymer of tetrafluoroethylene, hexafluoropropylene, and vinylidene fluoride (sold under the trade designation "DYNEON THV 500" by Dyneon, LLC.), delivered by another extruder at a rate of 17 pounds per hour, and PMMA for the skin layers, delivered by another extruder at a rate of 10 pounds per hour, were coextruded through a multilayer polymer melt manifold to create a multilayer melt stream having 151 layers with PMMA boundary and skin layers. This multilayer coextruded melt stream was cast onto a chill roll at 4.6 m/min creating a multilayer cast web 9 mils (about 0.23 mm) thick and 6 inches (about 15 cm) wide.

The multilayer cast web was stretched using the laboratory stretching device. A 4 inch (about 10 cm) square of the multilayer cast web was placed into the stretching frame and heated in an oven at 140°C in 55 seconds. The multilayer cast web was then stretched at 25 %/sec (based on the original dimensions) until the web was stretched to about 2.5 x 2.5 times the original dimensions. Immediately after stretching, the multilayer optical film was taken out of the stretching device and cooled at room temperature. The multilayer optical film was found to have a thickness of about 31 µm.

Example 14: Following the same procedure as in Example 13, a multilayer cast web was constructed with polypropylene (sold under the trade designation "HB311BF" by Borealis LLC., Port Murray, NJ) and a copolymer of hexafluoropropylene, tetrafluoroethylene, and ethylene (sold under the trade designation "DYNEON HTE 1510" by Dyneon, LLC.), having 151 layers with polypropylene boundary and skin layers. This multilayer coextruded melt stream was cast onto a chill roll at 0.9 m/min creating a multilayer cast web 42 mils (about 1.07 mm) thick and about 7.25 inches (about 18 cm) wide.

Example 15: Following the same procedure as in Example 13, a multilayer cast web was constructed with ALTUGLAS V O44 (PMMA) and a copolymer of tetrafluoroethylene, hexafluoropropylene, and vinylidene fluoride (sold under the trade designation "DYNEON THV 220" by Dyneon, LLC.), having 151 layers with PMMA boundary and skin layers. This multilayer coextruded melt stream was cast onto a chill roll at 1.5 m/min creating a multilayer cast web 30 mils (about 0.75 mm) thick and about 7 inches (about 17.5 cm) wide. Reference Example 16 (not part of the invention, for reference only): Following the same procedure as in Example 13, a multilayer cast web was constructed with polycarbonate (sold under the trade designation "MAKROLON OD2015" by Bayer MaterialScience, AG), and DYNEON THV 220, having 151 layers with polycarbonate boundary and skin layers. This multilayer coextruded melt stream was cast onto a chill roll at 4.6 m/min creating a multilayer cast web 9 mils (about 0.23 mm) thick and 6 inches (about 15 cm) wide.

Example 17: Following the same procedure as in Example 13, a multilayer cast web was constructed with ALTUGLAS V O44 (PMMA) and a copolymer of hexafluoropropylene, tetrafluoroethylene, and ethylene (sold under the trade designation "DYNEON HTE 1705" by Dyneon, LLC.) having 151 layers with PMMA boundary and skin layers. This multilayer coextruded melt stream was cast onto a chill roll at 1.5 m/min creating a multilayer cast web 29 mils (about 0.74 mm) thick and 7 inches (about 17.5 cm) wide.

Foreseeable modifications and alterations of this invention will become apparent to those skilled in the art without departing from the scope of this invention. This invention should not be restricted to the embodiments that are set forth in this application for illustrative purposes.

## Claims

1. A multilayer optical film comprising an optical stack, wherein the optical stack comprises:
a) a plurality of first optical layers, each first optical layer comprising a single melt-processible polymer, wherein the single melt-processible polymer is a fluoropolymer, wherein the fluoropolymer is a copolymer comprising interpolymerized monomers of tetrafluoroethylene, with the proviso that the melt-processible copolymer is not a fluorinated ethylene-propylene copolymer per ASTM D 2116-07 or a perfluoroalkoxy resin per ASTM D 3307-08; and
b) a plurality of second optical layers disposed in a repeating sequence with the plurality of first optical layers, each second optical layer comprising a non-fluorinated polymeric material selected from the group consisting of: poly(methyl methacrylate); copolymers of poly(methyl methacrylate); polypropylene; copolymers of propylene; polystyrenes; copolymers of styrene; polyvinylidene chloride; thermoplastic polyurethanes; copolymers of ethylene; cyclic olefin copolymers; and combinations thereof.

2. A multilayer optical film according to claim 1 wherein the single melt-processible polymer is selected from the group consisting of: copolymers of tetrafluoroethylene, hexafluoropropylene, and vinylidene fluoride; copolymers of hexafluoropropylene, tetrafluoroethylene, and ethylene; copolymers of tetrafluoroethylene and propylene; copolymers of tetrafluoroethylene and norbornene; and copolymers of ethylene and tetrafluoroethylene.

3. A multilayer optical film according to any one of the previous claims wherein the optical stack comprise layer pairs selected from the group consisting of: poly(methyl methacrylate) and (copolymers of tetrafluoroethylene, hexafluoropropylene, and vinylidene fluoride) layer pairs; poly(methyl methacrylate) and (copolymers of hexafluoropropylene, tetrafluoroethylene, and ethylene) layer pairs; copolymers of polypropylene and (copolymers of tetrafluoroethylene, hexafluoropropylene, and vinylidene fluoride) layer pairs; polypropylene and (copolymers of hexafluoropropylene, tetrafluoroethylene, and ethylene) layer pairs; polystyrene and (copolymers of tetrafluoroethylene, hexafluoropropylene, and vinylidene fluoride) layer pairs; copolymers of polystyrene and (copolymers of tetrafluoroethylene, hexafluoropropylene, and vinylidene fluoride) layer pairs; copolymers of polystyrene and (copolymers of hexafluoropropylene, tetrafluoroethylene, and ethylene) layer pairs; copolymers of polyethylene and (copolymers of tetrafluoroethylene, hexafluoropropylene, and vinylidene fluoride) layer pairs; copolymers of polyethylene and (copolymers of hexafluoropropylene, tetrafluoroethylene, and ethylene) layer pairs; cyclic olefin copolymers and (copolymers of tetrafluoroethylene, hexafluoropropylene, and vinylidene fluoride) layer pairs; cyclic olefin copolymers and (copolymers of hexafluoropropylene, tetrafluoroethylene, and ethylene) layer pairs; and thermoplastic polyurethane and (copolymers of tetrafluoroethylene, hexafluoropropylene, and vinylidene fluoride) layer pairs; and combinations thereof.

4. A multilayer optical film according to any one of the previous claims wherein the single melt-processible polymer comprising interpolymerized monomers of tetrafluoroethylene comprises three additional different monomers.

5. A multilayer optical film according to any one of the previous claims, wherein the optical stack transmits at least one of the following:
a) at least a portion of the wavelengths between about 400-700 nm;
b) at least a portion of the wavelengths greater than about 700 nm;
c) at least a portion of the wavelengths less than about 300 nm; or
d) at least a portion of the wavelengths between about 300-400 nm.

6. A multilayer optical film according to any one of the previous claims, wherein the optical stack reflects at least one of the following:
a) at least a portion of the wavelengths between about 400-700 nm;
b) at least a portion of the wavelengths greater than about 700 nm;
c) at least a portion of the wavelengths less than about 300 nm; or
d) at least a portion of the wavelengths between about 300-400 nm.

7. A multilayer optical film according to any one of the previous claims further comprising at least one of the following:
a) a printing;
b) an adhesive;
c) a tear resistant layer;
d) a UV-absorbing layer;
e) a skin layer; or
f) a protective boundary layer.

8. A multilayer optical film according to any one of the previous claims, further comprising a UV-absorbing compound, an IR-absorbing compound, or combinations thereof, wherein the melt-processible copolymer, the non-fluorinated polymeric material, or an optional additional layer comprises the UV-absorbing compound, the IR-absorbing compound, or combinations thereof.

9. A multilayer optical film according to any one of the previous claims, further comprising a functional additive, optionally, wherein the functional additive is a processing additive.

10. A multilayer optical film according to any one of the previous claims wherein the optical stack comprises at least 5 first optical layers and at least 5 second optical layers.

11. An article comprising the multilayer optical film according to any one of the previous claims.

12. An article according to claim 11, wherein the article is at least one of: a UV mirror, an IR mirror, or a visible mirror.

13. A method of using a multilayer film, wherein the article according to any one of claims 11 to 12 is used in at least one of the following:
a) solar power applications;
b) lighting applications; or
c) fenestration products.

14. A coating comprising small pieces of the multilayer optical film according to any one of claims 1-10, wherein the largest dimension of each piece is at least twice the thickness of the multilayer optical film and not more than the maximum thickness of the coating.

15. A method of making a multilayer optical film comprising:
a) providing a first optical layer comprising a single melt-processible polymer, wherein the single melt-processible polymer is a fluoropolymer, wherein the fluoropolymer is a copolymer comprising interpolymerized monomers of tetrafluoroethylene, with the proviso that the melt-processible copolymer is not a fluorinated ethylene-propylene copolymer per ASTM D 2116-07 or a perfluoroalkoxy resin per ASTM D 3307-08ASTM;
b) providing a second optical layer comprising a non-fluorinated polymeric material selected from the group consisting of poly(methyl methacrylate); copolymers of poly(methyl methacrylate); polypropylene; copolymers of polypropylene; polystyrene; copolymers of polystyrene; polyvinylidene chloride; thermoplastic polyurethane; copolymers of polyethylene; cyclic olefin copolymers; and combinations thereof; and
c) alternating the first optical layer and the second optical layer to construct a plurality of layers.

## Patentansprüche

1. Eine mehrschichtige optische Folie, umfassend einen optischen Stapel, wobei der optische Stapel umfasst:
a) eine Mehrzahl von ersten optischen Schichten, wobei jede erste optische Schicht ein einzelnes in der Schmelze verarbeitbares Polymer umfasst, wobei das einzelne in der Schmelze verarbeitbare Polymer ein Fluorpolymer ist, wobei das Fluorpolymer ein Copolymer ist, das interpolymerisierte Monomere von Tetrafluorethylen umfasst, mit der Maßgabe, dass das in der Schmelze verarbeitbare Copolymer kein fluoriertes Ethylen-Propylen-Copolymer nach ASTM D 2116-07 oder ein Perfluoralkoxyharz nach ASTM D 3307-08 ist; und
b) eine Mehrzahl von zweiten optischen Schichten, die in einer sich wiederholenden Abfolge mit der Mehrzahl von ersten optischen Schichten angeordnet ist, wobei jede zweite optische Schicht ein nicht fluoriertes Polymermaterial umfasst, das ausgewählt ist aus der Gruppe bestehend aus: Poly(methylmethacrylat); Copolymeren von Poly(methylmethacrylat); Polypropylen; Copolymeren von Propylen; Polystyrolen; Copolymeren von Styrol; Polyvinylidenchlorid; thermoplastischen Polyurethanen; Copolymeren von Ethylen; cyclischen Olefin-Copolymeren; und Kombinationen davon.

2. Eine mehrschichtige optische Folie nach Anspruch 1, wobei das einzelne in der Schmelze verarbeitbare Polymer ausgewählt ist aus der Gruppe bestehend aus: Copolymeren von Tetrafluorethylen, Hexafluorpropylen und Vinylidenfluorid; Copolymeren von Hexafluorpropylen, Tetrafluorethylen und Ethylen; Copolymeren von Tetrafluorethylen und Propylen; Copolymeren von Tetrafluorethylen und Norbornen; und Copolymeren von Ethylen und Tetrafluorethylen.

3. Eine mehrschichtige optische Folie nach einem der vorstehenden Ansprüche, wobei der optische Stapel Schichtpaare umfasst, die ausgewählt sind aus der Gruppe bestehend aus: Poly(methylmethacrylat)- und (Copolymere von Tetrafluorethylen, Hexafluorpropylen und Vinylidenfluorid)-Schichtpaaren; Poly(methylmethacrylat)- und (Copolymere von Hexafluorpropylen, Tetrafluorethylen und Ethylen)-Schichtpaaren; Copolymere von Polypropylen- und (Copolymere von Tetrafluorethylen, Hexafluorpropylen und Vinylidenfluorid)-Schichtpaaren; Polypropylen- und (Copolymere von Hexafluorpropylen, Tetrafluorethylen und Ethylen)-Schichtpaaren; Polystyrol- und (Copolymere von Tetrafluorethylen, Hexafluorpropylen und Vinylidenfluorid)-Schichtpaaren; Copolymere von Polystyrol- und (Copolymere von Tetrafluorethylen, Hexafluorpropylen und Vinylidenfluorid)-Schichtpaaren; Copolymere von Polystyrol- und (Copolymere von Hexafluorpropylen, Tetrafluorethylen und Ethylen)-Schichtpaaren; Copolymere von Polyethylen- und (Copolymere von Tetrafluorethylen, Hexafluorpropylen und Vinylidenfluorid)-Schichtpaaren; Copolymere von Polyethylen- und (Copolymere von Hexafluorpropylen, Tetrafluorethylen und Ethylen)-Schichtpaaren; cyclische Olefin-Copolymere- und (Copolymere von Tetrafluorethylen, Hexafluorpropylen und Vinylidenfluorid)-Schichtpaaren; cyclische Olefin-Copolymere- und (Copolymere von Hexafluorpropylen, Tetrafluorethylen und Ethylen)-Schichtpaaren; und thermoplastisches Polyurethan- und (Copolymere von Tetrafluorethylen, Hexafluorpropylen und Vinylidenfluorid)-Schichtpaaren; und Kombinationen davon.

4. Eine mehrschichtige optische Folie nach einem der vorstehenden Ansprüche, wobei das einzelne in der Schmelze verarbeitbare Polymer, das interpolymerisierte Monomere von Tetrafluorethylen umfasst, drei zusätzliche unterschiedliche Monomere umfasst.

5. Eine mehrschichtige optische Folie nach einem der vorstehenden Ansprüche, wobei der optische Stapel mindestens eines der Folgenden durchlässt:
a) mindestens einen Teil der Wellenlängen zwischen etwa 400-700 nm;
b) mindestens einen Teil der Wellenlängen größer als etwa 700 nm;
c) mindestens einen Teil der Wellenlängen kleiner als etwa 300 nm; oder
d) mindestens einen Teil der Wellenlängen zwischen etwa 300-400 nm.

6. Eine mehrschichtige optische Folie nach einem der vorstehenden Ansprüche, wobei der optische Stapel mindestens eines der Folgenden reflektiert:
a) mindestens einen Teil der Wellenlängen zwischen etwa 400-700 nm;
b) mindestens einen Teil der Wellenlängen größer als etwa 700 nm;
c) mindestens einen Teil der Wellenlängen kleiner als etwa 300 nm; oder
d) mindestens einen Teil der Wellenlängen zwischen etwa 300-400 nm.

7. Eine mehrschichtige optische Folie nach einem der vorstehenden Ansprüche, ferner umfassend mindestens eines der Folgenden:
a) einen Druck;
b) einen Klebstoff;
c) eine reißfeste Schicht;
d) eine UV absorbierende Schicht;
e) eine Außenschicht; oder
f) eine schützende Grenzschicht.

8. Eine mehrschichtige optische Folie nach einem der vorstehenden Ansprüche, ferner umfassend eine UV absorbierende Verbindung, eine IR absorbierende Verbindung oder Kombinationen davon, wobei das in der Schmelze verarbeitbare Copolymer, das nicht fluorierte Polymermaterial oder eine optionale zusätzliche Schicht die UV absorbierende Verbindung, die IR absorbierende Verbindung oder Kombinationen davon umfasst.

9. Eine mehrschichtige optische Folie nach einem der vorstehenden Ansprüche, ferner umfassend ein funktionelles Additiv, wobei gegebenenfalls das funktionelle Additiv ein Verarbeitungsadditiv ist.

10. Eine mehrschichtige optische Folie nach einem der vorstehenden Ansprüche, wobei der optische Stapel mindestens 5 erste optische Schichten und mindestens 5 zweite optische Schichten umfasst.

11. Ein Gegenstand, umfassend die mehrschichtige optische Folie nach einem der vorstehenden Ansprüche.

12. Ein Gegenstand nach Anspruch 11, wobei der Gegenstand mindestens einer ist von: einem UV-Spiegel, einem IR-Spiegel oder einem sichtbaren Spiegel.

13. Ein Verfahren zum Verwenden einer mehrschichtigen Folie, wobei der Gegenstand nach einem der Ansprüche 11 bis 12 in mindestens einem der Folgenden verwendet wird:
a) Solarenergieanwendungen;
b) Beleuchtungsanwendungen; oder
c) Fensterbauprodukten.

14. Eine Beschichtung, umfassend kleine Stücke der mehrschichtigen optischen Folie nach einem der Ansprüche 1-10, wobei die größte Abmessung jedes Stücks mindestens das Doppelte der Dicke der mehrschichtigen optischen Folie und nicht mehr als die maximale Dicke der Beschichtung beträgt.

15. Ein Verfahren zum Herstellen einer mehrschichtigen optischen Folie, umfassend:
a) Bereitstellen einer ersten optischen Schicht, die ein einzelnes in der Schmelze verarbeitbares Polymer umfasst, wobei das einzelne in der Schmelze verarbeitbare Polymer ein Fluorpolymer ist, wobei das Fluorpolymer ein Copolymer ist, das interpolymerisierte Monomere von Tetrafluorethylen umfasst, mit der Maßgabe, dass das in der Schmelze verarbeitbare Copolymer kein fluoriertes Ethylen-Propylen-Copolymer nach ASTM D 2116-07 oder ein Perfluoralkoxyharz nach ASTM D 3307-08 ist;
b) Bereitstellen einer zweiten optischen Schicht, die ein nicht fluoriertes Polymermaterial umfasst, das ausgewählt ist aus der Gruppe bestehend aus Poly(methylmethacrylat); Copolymeren von Poly(methylmethacrylat); Polypropylen; Copolymeren von Polypropylen; Polystyrol; Copolymeren von Polystyrol; Polyvinylidenchlorid; thermoplastischem Polyurethan; Copolymeren von Polyethylen; cyclischen Olefin-Copolymeren; und Kombinationen davon; und
c) Alternieren der ersten optischen Schicht und der zweiten optischen Schicht, um eine Mehrzahl von Schichten aufzubauen.

## Revendications

1. Film optique multicouche comprenant un empilement optique, dans lequel l'empilement optique comprend :
a) une pluralité de premières couches optiques, chaque première couche optique comprenant un unique polymère apte à être travaillé à l'état fondu, dans lequel le polymère apte à être travaillé à l'état fondu est un fluoropolymère, dans lequel le fluoropolymère est un copolymère comprenant des monomères interpolymérisés de tétrafluoroéthylène, à condition que le copolymère apte à être travaillé à l'état fondu ne soit pas un copolymère d'éthylène-propylène fluoré selon la norme ASTM D 2116-07 ou une résine perfluoroalcoxy selon la norme ASTM D 3307-08 ; et
b) une pluralité de deuxièmes couches optiques disposées selon une séquence répétitive avec la pluralité de premières couches optiques, chaque deuxième couche optique comprenant un matériau polymère non fluoré choisi dans le groupe constitué de :
poly(méthacrylate de méthyle) ; copolymères de poly(méthacrylate de méthyle) ; polypropylène ; copolymères de propylène ; polystyrènes ; copolymères de styrène ; polychlorure de vinylidène ; polyuréthanes thermoplastiques ; copolymères d'éthylène ; copolymères d'oléfines cycliques ; et de combinaisons de ceux-ci.

2. Film optique multicouche selon la revendication 1, dans lequel l'unique polymère apte à être travaillé à l'état fondu est choisi dans le groupe constitué de : copolymères de tétrafluoroéthylène, d'hexafluoropropylène et de fluorure de vinylidène ; copolymères d'hexafluoropropylène, de tétrafluoroéthylène et d'éthylène ; copolymères de tétrafluoroéthylène et de propylène ; copolymères de tétrafluoroéthylène et de norbornène ; et copolymères d'éthylène et de tétrafluoroéthylène.

3. Film optique multicouche selon l'une quelconque des revendications précédentes, dans lequel l'empilement optique comprend des paires de couches choisies dans le groupe constitué de :
paires de couches de poly(méthacrylate de méthyle) et de (copolymères de tétrafluoroéthylène, d'hexafluoropropylène et de fluorure de vinylidène) ; paires de couches de poly(méthacrylate de méthyle) et de (copolymères d'hexafluoropropylène, de tétrafluoroéthylène et d'éthylène) ; paires de couches de copolymères de polypropylène et de (copolymères de tétrafluoroéthylène, d'hexafluoropropylène et de fluorure de vinylidène) ; paires de couches de polypropylène et de (copolymères d'hexafluoropropylène, de tétrafluoroéthylène et d'éthylène) ; paires de couches de polystyrène et de (copolymères de tétrafluoroéthylène, d'hexafluoropropylène et de fluorure de vinylidène) ; paires de couches de copolymères de polystyrène et de (copolymères de tétrafluoroéthylène, d'hexafluoropropylène et de fluorure de vinylidène) ; paires de couches de copolymères de polystyrène et de (copolymères d'hexafluoropropylène, de tétrafluoroéthylène, et d'éthylène) ; paires de couches de copolymères de polyéthylène et de (copolymères de tétrafluoroéthylène, d'hexafluoropropylène et de fluorure de vinylidène) ; paires de couches de copolymères de polyéthylène et de (copolymères d'hexafluoropropylène, de tétrafluoroéthylène et d'éthylène) ; paires de couches de copolymères d'oléfines cycliques et de (copolymères de tétrafluoroéthylène, d'hexafluoropropylène et de fluorure de vinylidène) ; paires de couches de copolymères d'oléfines cycliques et de (copolymères d'hexafluoropropylène, de tétrafluoroéthylène et d'éthylène) ; et paires de couches de polyuréthane thermoplastique et de (copolymères de tétrafluoroéthylène, d'hexafluoropropylène et de fluorure de vinylidène) ; et de combinaisons de ceux-ci.

4. Film optique multicouche selon l'une quelconque des revendications précédentes, dans lequel l'unique polymère apte à être travaillé à l'état fondu comprenant des monomères interpolymérisés de tétrafluoroéthylène comprend trois monomères différents supplémentaires.

5. Film optique multicouche selon l'une quelconque des revendications précédentes, dans lequel l'empilement optique transmet au moins l'un de ce qui suit :
a) au moins une partie des longueurs d'onde entre environ 400 et 700 nm ;
b) au moins une partie des longueurs d'onde supérieures à environ 700 nm ;
c) au moins une partie des longueurs d'onde inférieures à environ 300 nm ; ou
d) au moins une partie des longueurs d'onde entre environ 300 et 400 nm.

6. Film optique multicouche selon l'une quelconque des revendications précédentes, dans lequel l'empilement optique réfléchit au moins l'un de ce qui suit :
a) au moins une partie des longueurs d'onde entre environ 400 et 700 nm ;
b) au moins une partie des longueurs d'onde supérieures à environ 700 nm ;
c) au moins une partie des longueurs d'onde inférieures à environ 300 nm ; ou
d) au moins une partie des longueurs d'onde entre environ 300 et 400 nm.

7. Film optique multicouche selon l'une quelconque des revendications précédentes, comprenant en outre au moins l'un de ce qui suit :
a) une impression ;
b) un adhésif ;
c) une couche résistant au déchirement ;
d) une couche absorbant les UV ;
e) une couche superficielle ; ou
f) une couche limite de protection.

8. Film optique multicouche selon l'une quelconque des revendications précédentes, comprenant en outre un composé absorbant les UV, un composé absorbant les IR, ou des combinaisons de ceux-ci, dans lequel le copolymère apte à être travaillé à l'état fondu, le matériau polymère non fluoré ou une couche supplémentaire facultative comprend le composé absorbant les UV, le composé absorbant les IR, ou des combinaisons de ceux-ci.

9. Film optique multicouche selon l'une quelconque des revendications précédentes, comprenant en outre un additif fonctionnel, l'additif fonctionnel étant facultativement un additif de traitement.

10. Film optique multicouche selon l'une quelconque des revendications précédentes, dans lequel l'empilement optique comprend au moins 5 premières couches optiques et au moins 5 deuxièmes couches optiques.

11. Article comprenant le film optique multicouche selon l'une quelconque des revendications précédentes.

12. Article selon la revendication 11, où l'article est au moins un article parmi : un miroir réfléchissant les UV, un miroir réfléchissant les IR, ou un miroir réfléchissant la lumière visible.

13. Procédé d'utilisation d'un film multicouche, dans lequel l'article selon l'une quelconque des revendications 11 à 12 est utilisé dans au moins l'un de ce qui suit :
a) des applications d'énergie solaire ;
b) des applications d'éclairage ; ou
c) des produits de fenêtrage.

14. Revêtement comprenant de petites pièces du film optique multicouche selon l'une quelconque des revendications 1 à 10, dans lequel la plus grande dimension de chaque pièce fait au moins deux fois l'épaisseur du film optique multicouche et ne fait pas plus que l'épaisseur maximale du revêtement.

15. Procédé de fabrication d'un film optique multicouche, comprenant :
a) la fourniture d'une première couche optique comprenant un unique polymère apte à être travaillé à l'état fondu, dans lequel le polymère apte à être travaillé à l'état fondu est un fluoropolymère, dans lequel le fluoropolymère est un copolymère comprenant des monomères interpolymérisés de tétrafluoroéthylène, à condition que le copolymère apte à être travaillé à l'état fondu ne soit pas un copolymère d'éthylène-propylène fluoré selon la norme ASTM D 2116-07 ou une résine perfluoroalcoxy selon la norme ASTM D 3307-08 ;
b) la fourniture d'une deuxième couche optique comprenant un matériau polymère non fluoré choisi dans le groupe constitué de poly(méthacrylate de méthyle) ; copolymères de poly(méthacrylate de méthyle) ; polypropylène ; copolymères de polypropylène ; polystyrène ; copolymères de polystyrène ; polychlorure de vinylidène ; polyuréthane thermoplastique ; copolymères de polyéthylène ; copolymères d'oléfines cycliques ; et de combinaisons de ceux-ci. et
c) l'alternance de la première couche optique et de la deuxième couche optique pour construire une pluralité de couches.
